# EUROPÄISCHE PATENTSCHRIFT

(11) **EP 0 885 533 B1**
(45) Veröffentlichungstag und Bekanntmachung des Hinweises auf die Patenterteilung: **21.01.2004**
(21) Anmeldenummer: 97905144.8
(22) Anmeldetag: 01.03.1997
(51) Int. Cl.: H04Q 3/00, H04M 15/00

(54) **VERFAHREN ZUM VERBINDUNGSAUFBAU UND ZUR ABRECHNUNG VON VERBINDUNGEN IN TELEKOMMUNIKATIONSNETZEN**
PROCESS FOR MAKING CONNECTIONS AND ACCOUNTING FOR CONNECTIONS IN TELECOMMUNICATION SYSTEMS
PROCEDE POUR ETABLIR UNE COMMUNICATION ET POUR FACTURER DES COMMUNICATIONS DANS DES RESEAUX DE TELECOMMUNICATIONS

(30) Priorität: 05.03.1996 DE 19608419
(43) Veröffentlichungstag der Anmeldung: 23.12.1998
(73) Patentinhaber: T-Mobile Deutschland GmbH, 53227 Bonn (DE)
(72) Erfinder: DENNERT, Thomas, D-53844 Troisdorf (DE)
(74) Vertreter: Riebling, Peter, Dr.-Ing.
(86) Internationale Anmeldenummer: PCT/EP1997/001034
(87) Internationale Veröffentlichungsnummer: WO 1997/033439

(56) Entgegenhaltungen:
- WO-A-95/06381
- WO-A-95/24094
- US-A- 5 181 237
- US-A- 5 325 421
- US-A- 5 333 181
- FIGURSKI D M ET AL: "USER-CENTERED PROGRAMMABILITY OF INTELLIGENT NETWORK FEATURES" ICC-91, 23. - 26.Juni 1991, DENVER, Seiten 936-940, XP000269623
- ABRAMOWSKI S ET AL: "CONCEPTS FOR SERVICE MANAGEMENT BY END USERS" GLOBECOM '93, 29.November 1993 - 2.Dezember 1993, HOUSTON, US, Seiten 867-871, XP000427931

## Beschreibung

Die Erfindung beschreibt ein Verfahren zum Verbindungsaufbau und zur Abrechnung von Verbindungen in Telekommunikations-netzen für bestimmte, vom Teilnehmer individuell auswählbare Zielrufnummern nach dem Oberbegriff des Patentanspruches 1.

In zahlreichen Telekommunikationsnetzen besteht der Bedarf, Telekommunikationsverbindungen zu Gesprächszielen, die vom Teilnehmer individuell vorgegeben werden können, einem speziellen, z. B. günstigeren Abrechnungstarif zu unterwerfen. Dies wird üblicherweise dadurch erzielt, daß der Teilnehmer seinem Netzbetreiber einzelne Rufnummern mitteilt, für die der spezielle, günstige Tarif gelten soll. Die vom Teilnehmer übermittelten Daten müssen vom Netzbetreiber erfaßt und in sein Abrechnungssystem übernommen werden. Nachdem innerhalb eines Netzes die Gesprächs-/Gebührendaten des Teilnehmers aufgesammelt wurden, erfolgt durch das Abrechnungssystem die Bewertung dieser Daten, wobei aufgrund der Zufuhr eingetragenen Kundeninformation eine entsprechende Gebührenabrechnung für ausgewählte Gesprächsziele erfolgen. Hierbei entsteht dem Netzbetreiber ein hoher administrativer Aufwand bei der Verwaltung der vom Kunden genannten Rufnummern, so daß nach speziellen Handhabungsroutinen innerhalb der Abrechnungssysteme gesucht wird

Bekannte Verfahren weisen auch für den Teilnehmer gewisse Nachteile auf, denn obwohl der Teilnehmer seine für einen günstigen Tarif ausgewählten Gesprächsziele in der Regel selten ändert, ist eine Änderung dennoch unbequem, da der Teilnehmer dem Netzbetreiber jede Änderung der gewünschten Zielrufnummer in mündlicher bzw. schriftlicher Form mitteilen muß. Ein "Durchschalten" der geänderten Zielrufnummer erfolgt zum Teil nicht sofort, sondern mit gewisser Verzögerung.

Ein Verfahren zum Verbindungsaufbau der oben beschriebenen Art mit den beschriebenen Nachteilen ist aus der WO-A-95/05381 bekannt. Ferner werden in dem Aufsatz von S. Abramowski et al.: "Concepts For Servive Management By End Users", Philips Research Laboratories Aachen, 29. November 93, Möglichkeiten einer Administration von Diensten eines Telekommunikationsnetzes durch den Endverbraucher beschrieben. Es ist eine IN Dienstelogik für den VPN Dienst offenbart, die dem Teilnehmer die Möglichkeit gibt, Zielrufnummern unter Verwendung einer Dienstekennzahl selbst einzugeben und zu ändern. Dabei muß der Teilnehmer sich jedoch vor Nutzung dieses Dienstes beim Netzbetreiber registrieren lassen.

Aufgabe der vorliegenden Erfindung ist es, ein Verfahren zum Verbindungsaufbau und zur Abrechnung von Verbindungen in Telekommunikationsnetzen für bestimmte, vom Teilnehmer individuell auswählbare Zielrufnummern vorzuschlagen, das gegenüber den bekannten Verfahren wesentlich kundenfreundlicher ist und dem Netzbetreiber zur Verwaltung und Gebührenabrechnung einen geringeren administrativen Aufwand verspricht.

Gelöst wird diese Aufgabe durch die im kennzeichnenden Teil des Anspruchs 1 genannten Merkmale.

Die Erfindung basiert darauf, dem Teilnehmer die Möglichkeit zu geben, selbständig einzelne, häufig benutzte Zielrufnummern in einer Datenbank des Telekommunikationsnetzes abzulegen und später durch eine einfache Wahlprozedur über sein Endgerät zu nutzen. Für den Dateneintrag, d. h. die Angabe der gewünschten Zielrufnummern, initiiert der Teilnehmer mittels der für ihn üblichen wählprozedur einen Rufaufbau zu einer im Netz festgelegten Dienstkennzahl. Die Wahlinformation enthält hierbei in einer ersten Variante neben der Dienstkennzahl die zu programmierende Zielrufnummer, die in der teilnehmer-individuellen Datenbank abgelegt werden soll. Durch Anwahl der Dienstkennzahl wird die Verbindung zu einer spezialisierten Diensttechnik innerhalb des Netzes durchgeschaltet. Für den Teilnehmer wird anhand seiner dem Netz bekannten, eigenen Rufnummer ein Datenbankeintrag angelegt, unter dem die Zielrufnummer abgelegt wird, für die der gewünschte, spezielle Abrechnungstarif gelten soll.

Alternativ ist es vorgesehen, daß der Teilnehmer nur den Netzdienst durch Eingabe der Dienstkennzahl anwählt, und die Zielrufnummer über eine Sprachausgabeeinheit oder ähnliches abgefragt wird. Der Teilnehmer kann dann durch Nachwahl die gewünschte Zielrufnummer eingeben.

Die Eintragung des teilnehmerspezifischen Datums in eine Datenbank eines ausgewählten Diensteknotes erfordert hierbei keine vorherige Anmeldung für diese Dienstleistung beim Netzbetreiber.

Nachdem auf diese Weise ein Datenbankeintrag für den Teilnehmer im Netz angelegt wurde, kann der Teilnehmer beliebig oft unter einer der eingegebenen Zielrufnummer zugeordneten Kurzrufnummer den Dienst nutzen. Die Kurzrufnummer ist in der Regel vorher bekannt und ist der Dienstkennzahl zur Programmierung des Datenbankeintrages fest zugeordnet. Hierbei führt jeder Rufaufbau, welcher mittels Wahl der Kurzrufnummer initiiert wird, wieder auf die spezialisierte Netztechnik. Diese sucht dann anhand der Teilnehmerrufnummer den unter der Kurzrufnummer gespeicherten Teilnehmereintrag in ihrer Datenbank. Nach erfolgreicher Suche wird der weitere Verbindungsaufbau zum Zielanschluß anhand der dem Eintrag zugeordneten Zielrufnummer durchgeführt.

Somit kommt es letztlich zur Verbindung zwischen rufendem Teilnehmer und gewünschtem Gesprächspartner. Hierbei erfolgt durch die Abwicklung der Dienstlogik keine für den rufenden Teilnehmer spürbare Verzögerung des Rufaufbaus. Die durch das Netz vorgegebene Dienstkennzahl, welche vom Teilnehmer angewählt wurde, kann erheblich kürzer sein, als die dem Zielanschluß zugeordnete Rufnummer.

Für die Verbindung wird, wie für jede andere abgehende Verbindung des Teilnehmers, ein Gesprächsdatensatz angelegt, welcher es erlaubt, die Verbindung entsprechend abzurechnen. Aufgrund der Tatsache, daß hierin die speziell gewählte Rufnummer, nämlich die Dienstkennzahl, als Zielinformation enthalten ist, kann das Abrechnungssystem dieser Verbindung den speziellen Tarif zuordnen.

Das hier beschriebene Verfahren verknüpft die Möglichkeiten einer intelligenten Rufnummernumwandlung gemäß individueller Teilnehmervorgaben mit einem einfachen, teilnehmer-spezifischen Abrechnungsmechanismus. Hierbei kann der Teilnehmer selbständig innerhalb des Netzes die für seinen Dienst nötigen Informationen abspeichern, ohne einen Administrationsvorgang durch seinen Netzbetreiber.

Gleichzeitig bietet das Verfahren dem Teilnehmer die Möglichkeit, über im Telekommunikationsnetz verwaltete Kurzrufnummern die Anwahl häufiger Gesprächspartner zu vereinfachen.

Durch die Verknüpfung des obigen Mechanismus mit Verfahren basierend auf üblichen Abrechnungssystemen gelingt es, eine spezielle Gebührenabrechnung für teilnehmerindividuelle Gesprächsziele zu unterstützen.

Das Verfahren erfordert keinen speziellen Hardware-Aufwand und unterstützt beliebige Telekommunikationsnetze und Anlagen, bei denen für den Aufbau einer Verbindung die Übertragung von Zielrufnummern und Ursprungsrufnummern gewährleistet ist. Beispiel sind hierfür insbesondere öffentliche Netze mit ISDN (ISUP) oder TUP Signalisierung und private Netze mit Q-SIG oder ISDN (DSS1) Signalisierung. Jedoch sind auch ältere Netze mit z. B. R2, IKZ50 Wahlverfahren grundsätzlich geeignet. Öffentliches sowie privates Netz können hierbei sowohl analoge wie digitale Übertragungstechnik unterstützen, Telephonie oder Daten übertragen, sowie ein Festnetz wie auch ein Funknetz bilden. Die Dienstlogik des Verfahrens basiert auf einem zentralen Dienstknoten und einer Dienstdatenbank, die mit den Vermittlungen des Telekommunikationsnetzes kommuniziert und dieses steuert. Eine typische Umsetzung einer solchen Basis bildet die IN (Intelligent Network) Technologie.

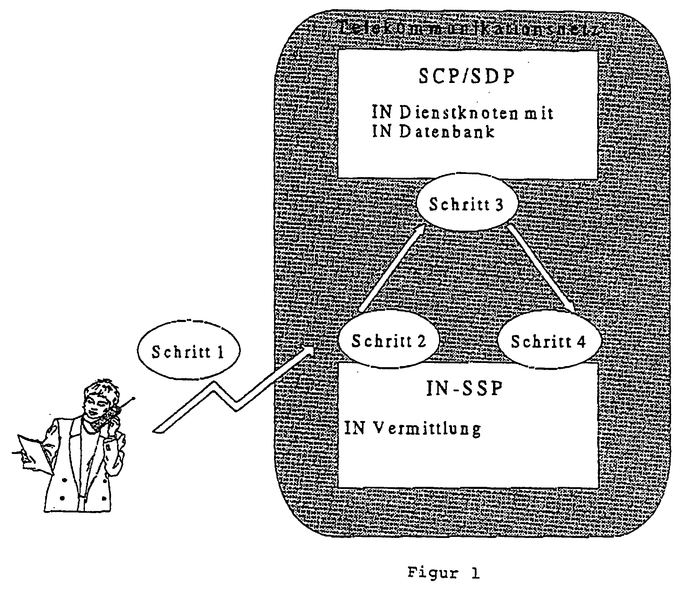

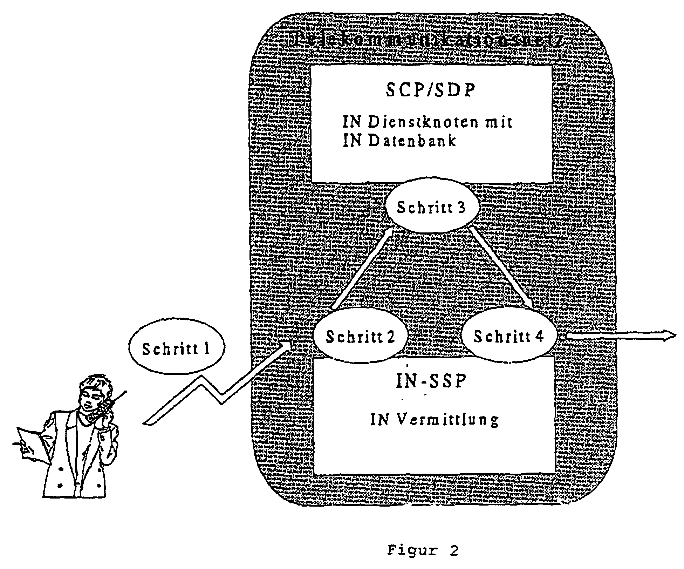

Die vorliegende Erfindung wird nun anhand eines Beispiels, mit Hilfe der Tabellen 1 und 2 und den Zeichnungen Figur 1 und 2 näher erläutert. Im Beispiel wird von einem Mobiltelekommunikationsnetz nach GSM-Standard ausgegangen.

Nach Figur 1 erfolgt die Eintragung der vom Teilnehmer gewünschten spezifischen Zielrufnummer folgendermaßen:

### Schritt 1:

Der Teilnehmer mit der Rufnummer R wählt eine Dienstkennzahl P1 zur Programmierung, gefolgt von einer Zielrufnummer Z1. Sofern die nächstliegenden Teilnehmervermittlung keine IN-Funktionalität hat, dient die Dienstkennzahl P1 zunächst zur Adressierung einer geeigneten IN-Vermittlung, um die Vermittlung zwischen Teilnehmeranschluß (in diesem Beispiel die Luftschnittstelle eines Funknetzes) und der IN-Vermittlung (IN-SSP) herzustellen.

### Im Beispiel:

Der Teilnehmer mit der Rufnummer 0171-xx.. wählt die Dienstkennzahl z.B 01704 gefolgt von der Zielrufnummer 0228-yy...

### Schritt 2:

Die gewählte Dienstkennzahl P1 wird in der IN-Vermittlung (IN-SSP) erkannt und daraufhin eine Meldung mit allen relevanten Informationen, also Teilnehmerrufnummer R und Zielrufnummer Z1 zum IN-Dienstknoten (Service Control Point, SCP) gesendet.

### Im Beispiel:

Die gewählte Dienstkennzahl 01704 wird in der integrierten GSM/IN-Vermittlung erkannt und eine Meldung mit allen relevanten Informationen, Teilnehmerrufnummer 0171-xx.. und Zielrufnummer 0228-yy.. zum IN-Dienstknoten gesendet.

### Schritt 3:

Der Dienstknoten (SCP) erkennt anhand der Dienstkennzahl P1 den spezifischen Dienst. Zunächst wird ermittelt, ob zu dem Teilnehmer mit der Rufnummer R bereits ein Datenbankeintrag vorliegt. Ist dies nicht der Fall, so wird ein neuer Datenbankeintrag für diesen Teilnehmer angelegt. Hierbei wird anhand einer globalen, in der Datenbank abgelegten Tabelle ermittelt, um welche der möglichen Einträge 1 bis m des Teilnehmers es sich handelt.

### Im Beispiel:

Der Dienstknoten liegt in seiner Datenbank einen Teilnehmereintrag für den Teilnehmer 0171-xx.. an. Unter diesem Eintrag wird'unter einer ersten Kurzrufnummer N1 (= z.B. 01701) die Zielrufnummer 0228-yy.. gespeichert

**Tabelle 1:**

| Zuordnung der Kennzahlen für Programmierung und Nutzung des Dienstes | | |
|---|---|---|
| Eintragsnummer | Dienstkennzahl für Programmierung | Kurzrufnummer (Dienstkennzahl für Nutzung) |
| 1 | 01704 | 01701 |
| 2 | P2 | N2 |
| ... | ... | ... |
| m | Pm | Nm |

Der Dienstknoten (SCP) legt dann in seiner Datenbank einen neuen Teilnehmereintrag für den Teilnehmer mit der Rufnummer R an (Tabelle 2). Unter diesem Eintrag wird entsprechend der in Tabelle 1 gefundenen Eintragsnummer 1 als erste Zielrufnummer die Zielrufnummer Z1 (=0228-yy..) gespeichert. Somit entsteht teilnehmerindividuell folgender permanenter Datenbankeintrag in der Datenbank des IN-Dienstknotens:

**Tabelle 2:**

| Teilnehmerdatenbank. Datenbankstruktur für die teilnehmerspezifischen Einträge | | | | |
|---|---|---|---|---|
| Teilnehmernummer | Zielrufnr.1 | Zielrufnr.2 | Zielrufnr.. | Zielrufnr.m |
| 0171-xx.. | 0228-yy.. | Z2 | ... | Zm |
| ... | ... | ... | ... | ... |
| ... | ... | ... | ... | ... |
| ... | ... | ... | ... | ... |

### Schritt 4:

Der IN-IP (Intelligent Peripheral) der Vermittlung erzeugt eine Quittungsansage für den Teilnehmer, um die erfolgreiche Abwicklung des Datenbankeintrags zu signalisieren, und nennt die der eingegebenen Zielrufnummer Z1 zugeordnete Kurzrufnummer N1.

### Im Beispiel:

Der IN-IP der Vermittlung erzeugt z. B. die Ansage "Vielen Dank, Ihre Zielrufnummer 0228-yy.. wurde erfolgreich eingetragen. Sie können diese nun durch Wahl der 01701 benutzen".

In einer anderen Ausführungsform der Erfindung ist es vorgesehen, eine alternative Bedienoberfläche für den Teilnehmer anzubieten. Um dem Teilnehmer die Handhabung des Dienstes zu erleichtern ist vorgesehen, daß der Teilnehmer zunächst nur die kurze Dienstkennzahl, z. B. 01704 wählt, welche den IN-Dienst initiiert. Der Teilnehmer wird dann über eine Sprachausgabefunktion des intelligenten Netzes (Intelligent Peripheral) zur Eingabe der Zielrufnummer aufgefordert. Typischerweise geschieht eine solche Eingabe z. B. über DTMF-Wahltöne, welche im Sprachband übertragen werden. Die Behandlung der durch den IP aufgerufenen Zielrufnummer im IN-Dienstknoten geschieht dann entsprechend den obigen Schritten 2 bis 4.

Die Nutzung der erfindungsgemäßen Dienstleistung durch den Teilnehmer geschieht entsprechend Figur 2:

### Schritt 1:

Der Mobilfunkteilnehmer mit der Rufnummer R wählt die Dienstkennzahl N1, welche die einer vorher einprogrammierten Zielrufnummer zugeordnet wurde. Soweit die Teilnehmervermittlung keine IN-Funktionalität hat, dient die Dienstkennzahl zunächst nur der Adressierung einer geeigneten IN-Vermittlung, um die Verbindung zwischen Teilnehmeranschluß (in diesem Beispiel eine Luftschnittstelle eines Funknetzes) und der IN-Vermittlung (IN-SSP) herzustellen.

### Im Beispiel:

Der Mobilfunkteilnehmer mit der Rufnummer 0171-xx.. wählt die Kurzrufnummer 01701.

### Schritt 2:

Die gewählte Dienstkennzahl N1 wird in der IN-Vermittlung erkannt und nachfolgend eine Meldung mit den relevanten Informationen (Dienstkennzahl N1, Teilnehmerrufnummer R) zum IN-Dienstknoten gesendet.

### Im Beispiel:

Die gewählte Kurzrufnummer 01701 wird in der integrierten GSM/IN-Vermittlung erkannt und eine Meldung mit allen relevanten Informationen zum IN-Dienstknoten gesendet.

### Schritt 3:

Aufgrund der Tabelle 1 (siehe oben) erkennt der Dienstknoten, daß es sich um den hier beschriebenen Dienst und eine gewünschte Nutzung der ersten Zielrufnummer Z1 handelt. Daraufhin wird aus der Teilnehmerdatenbank Tabelle 2 anhand der Teilnehmerdaten im Eintrag für die Rufnummer R die erste Zielrufnummer Z1 abgefragt. Mit dieser Rufnummer initiiert der Dienstknoten den weiteren Rufaufbau zum Teilnehmer mit der Rufnummer Z1.

### Im Beispiel:

Der Dienstknoten sucht den zur Teilnehmerrufnummer 0171-xx.. gehörenden Teilnehmereintrag. Nach erfolgreicher Suche liest der Knoten die der Kurzrufnummer 01701 zugeordnete Zielrufnummer 0228-yy.. des Teilnehmereintrages und initiiert den weiteren Verbindungsaufbau.

### Schritt 4:

Die IN-Vermittlung stellt daraufhin die Verbindung des rufenden Teilnehmers mit der Zielrufnummer Z1 her.

### Im Beispiel:

Als Zielrufnummer wird also durch den Dienstknoten und die Vermittlungsstelle die Zielrufnummer 0228-yy.. angewählt.

Für jede abgehende Verbindung auch für Verbindungen unter Benutzung der Kurzrufnummern, wird im Telekommunikationsnetz ein Gesprächsdatensatz erzeugt. Anhand der Kurzrufnummer, die in diesem Datensatz enthalten ist, erkennt das Abrechnungssystem, daß eine Verbindung unter Nutzung des erfindungsgemäßen Verfahrens aufgebaut wurde. Die Zuordnung von Tarifen in Abhängigkeit von der der Kurzrufnummer zugeordneten Zielrufnummer und unter Umständen weiteren anderen Parametern ist eine Grundfunktionalität eines modernen Abrechnungssystems. Deshalb ist es möglich, der Dienstkennzahl bzw. Kurzrufnummer N1, welche als Wahlinformation für das Gespräch mit der Zielrufnummer Z1 benutzt wurde, einen speziellen Sondertarif zuzuordnen und somit dem Kunden eine spezielle Abrechnungsart für die über die Kurzrufnummern aufgebauten Verbindungen anzubieten.

Vorteil des beschriebenen Verfahrens ist, daß der Teilnehmer selbst, ohne "aktives" Zutun des Netzbetreibers, seine gewünschten Rufnummer speichern kann, für welche er einen speziellen Abrechnungstarif wünscht. Die gespeicherten Daten können durch den Kunden beliebig, aber in festgelegtem zeitlichen Maße, z.B. zwei mal pro Monat, geändert werden. Das Verfahren eignet sich sowohl für Mobilfunknetze, als auch für Festnetze und ist durch den Netzbetreiber mit geringem Aufwand realisierbar. Wesentlich ist, daß nach erfolgreicher Installation dieses Dienstes für den Netzbetreiber keine weiteren administrativen Tätigkeiten mehr notwendig sind. Die moderne, weitläufig eingesetzte IN-Vermittlungstechnik ermöglicht einfache Implementierung dieses Verfahrens, da die benötigten Grundvoraussetzungen bereits gegeben sind.

Es sind keine Modifikationen der bestehenden integrierten Vermittlungssysteme für Administration, Abrechnung und Vertriebsunterstützung zu erwarten.

Verwendete Abkürzungen und Begriffe:

| | |
|---|---|
| IN | Intelligent Network |
| IP | Intelligent Peripheral (Einheit für Ansagen und z.B DTMF-Erkennung |
| SSP | Service Switching Point |
| SCP | Service Control Point |

## Patentansprüche

1. Verfahren zum Verbindungsaufbau und zur Abrechnung von Verbindungen in Telekommunikationsnetzen für bestimmte, vom Teilnehmer individuell auswählbare Zielrufnummern, bei dem der Teilnehmer dem Betreiber des Telekommunikationsnetzes eine begrenzte Anzahl von Zielrufnummern mitteilen kann, die in einer in einem Dienstknoten des Netzes vorgesehenen Datenbank ablegt werden, und in der Datenbank der Zielrufnummer eine Kurzrufnummer zugeordnet wird, die der Teilnehmer dann beliebig oft anwählen kann, wobei in der Datenbank nach Anwahl der Kurzrufnummer die zugehörige Zielrufnummer ermittelt wird und ein Verbindungsaufbau mit der Zielrufnummer erfolgt, und alle über die Kurzrufnummer angewählten Gespräche unter einem der Kurzrufnummer zugeordneten, speziellen Tarif abgerechnet werden, **dadurch gekennzeichnet, daß** der Teilnehmer selbst, ohne vorherige Anmeldung für diese Dienstleistung beim Betreiber des Telekommunikationsnetes, durch Anwahl einer netzinternen Dienstkennzahl in der Datenbank die individuell ausgewählte Zielrufnummer ablegt.

2. Verfahren nach Anspruch 1, **dadurch gekennzeichnet, daß** der Teilnehmer seine ausgewählten Rufnummern über das Tastenfeld seines Telekommunikationsendgerätes eingibt.

3. Verfahren nach Anspruch 1 oder 2, **dadurch gekennzeichnet, daß** die Datenbank einen globalen Datensatz enthält, der im wesentlichen folgende Informationen umfaßt:
- Nummer des möglichen Eintrags (1-m),
- mögliche Dienstkennzahlen für Programmierung der Datenbankeinträge durch den Teilnehmer (P1-Pm),
- die den Dienstkennzahlen zugeordnete Kurzrufnummern (N1-Nm).

## Claims

1. Method for a connection setup and for billing connections in telecommunications networks for specific destination directory numbers individually selectable by the subscriber, in which the subscriber can communicate to the operator of the telecommunications network a limited number of destination directory numbers which are filed in a database provided in a service node of the network and in the database an abbreviated dial code which the subscriber can dial as often as wished is assigned to the destination directory number, wherein after the abbreviated dial code has been dialled the associated destination directory number is determined in the database and a connection setup to the destination directory number takes place and all calls dialled via the abbreviated dial code are billed at a special tariff assigned to the abbreviated dial code, **characterised in that**, without prior log-on for this service provision from the operator of the telecommunications network, by selecting an internal network service code the subscriber himself files the individually selected destination directory number in the database.

2. Method according to claim 1, **characterised in that** the subscriber enters his chosen call numbers via the key pad of his telecommunications terminal.

3. Method according to claim 1 or 2, **characterised in that** the database contains a global data set which essentially comprises the following information:
- number of the possible entry (1-m)
- possible service codes for programming the database entries by the subscriber (P1-Pm)
- the abbreviated dial codes (N1-Nm) assigned to the service codes.

## Revendications

1. Procédé pour établir une communication et pour facturer des communications dans des réseaux de télécommunication pour des numéros d'appel de destination définis pouvant être choisis individuellement par l'abonné, selon lequel l'abonné peut indiquer à l'exploitant du réseau de télécommunication un nombre limité de numéros d'appel de destination, qui sont mis en mémoire dans une banque de données prévue dans un noeud de service du réseau, et dans la banque de données, on attribue au numéro d'appel de destination un numéro abrégé que l'abonné peut ensuite composer aussi souvent qu'il le veut, étant précisé que dans la banque de données, après que le numéro abrégé a été composé, le numéro d'appel de destination correspondant est déterminé et une communication est établie avec le numéro d'appel de destination, et que toutes les communications obtenues grâce au numéro abrégé sont facturées à un tarif spécial affecté au numéro abrégé, **caractérisé en ce que** l'abonné dépose lui-même dans la banque de données le numéro d'appel de destination choisi individuellement, en composant une identification de service interne au réseau, sans demande préalable pour ce service auprès de l'exploitant du réseau de télécommunication.

2. Procédé selon la revendication 1, **caractérisé en ce que** l'abonné entre ses numéros d'appels choisis, grâce au clavier de son terminal de télécommunication.

3. Procédé selon la revendication 1 ou 2, **caractérisé en ce que** la banque de données contient un enregistrement global qui comprend essentiellement les informations suivantes :
- numéro de l'inscription possible (1-m),
- identifications de service possibles pour la programmation des inscriptions dans la banque de données par l'abonné (P1-Pm),
- les numéros abrégés (N1-Nm) affectés aux identifications de service.
